# EUROPÄISCHE PATENTSCHRIFT

(11) **EP 0 584 393 B1**
(45) Veröffentlichungstag und Bekanntmachung des Hinweises auf die Patenterteilung: **05.07.1995**
(21) Anmeldenummer: 92114717.9
(22) Anmeldetag: 28.08.1992
(51) Int. Cl.: F24D 11/00, F24H 1/20, F28D 20/00

(54) **Erweiterbarer Langzeit-Wasser-Wärmespeicher**
Expandable long term water filled heatstorage
Accumulateur de chaleur à eau à long terme et extensible

(43) Veröffentlichungstag der Anmeldung: 02.03.1994
(73) Patentinhaber: Haase, Georg, D-57399 Kirchhundem (DE)
(72) Erfinder: Haase, Georg, D-57399 Kirchhundem (DE)

(56) Entgegenhaltungen:
- CH-A- 519 143
- DE-A- 1 910 088
- FR-A- 2 405 443
- GB-A- 745 207

## Beschreibung

Die Erfindung bezieht sich auf einen erweiterbaren Langzeit-Wasser-Wärmespeicher der im Oberbegriff des Patentanspruchs beschriebenen Gattung. Wasser-Wärmespeicher in der bisher bekannten Form dienen allein der Brauchwasserbereitung und sind nicht für die Beheizung von Gebäuden vorgesehen. Sie sind als Einzelspeicher konzipiert und nur so groß, daß sie durch Normtüren von 800mm Breite transportiert werden können und nicht ohne weiteres zu Langzeit-Wärmespeicher-Batterien gekoppelt werden können und auch nicht dafür vorgesehen sind. Sollen dennoch für einen größeren Brauchwasserbedarf mehrere der bekannten Speicher verbunden werden, müssen immer Rohrleitungen mit Umwälzpumpen installiert werden, die keine Temperaturschichtung zulassen, oder jeder der Einzelspeicher muß die erforderlichen Wärmetauscher besitzen, die nur in Parallelschaltung betrieben werden können was einen unwirtschaftlich hohen Kosteneinsatz zur Folge hat. Zur effektiveren Nutzung von konventionellen Heizanlagen, im besonderen aber von erneuerbaren Energien und Abwärme aus Industrie und Gewerbe, sind große Speichervolumen mit einer ungestörten Temperaturschichtung im gesamten Speicher unbedingt erforderlich. Denn je größer z.B. der Temperaturunterschied zwischen dem unteren Bereich eines Wärmespeichers und einem Solarkollektor ist, um so größer ist der Wirkungsgrad der Gesamtanlage, und je größer das Speichervolumen, um so größer der Jahresnutzungsgrad

Es muß die Möglichkeit gegeben sein, in jedem Gebäude schon mit einem ersten Speichermodul, alle nur denkbaren Energiequellen einzeln oder gleichzeitig zu nutzen, und alle nur denkbaren Heizsysteme einzeln oder gleichzeitig zu versorgen Schon das erste Modul muß zu einer "Schnittstelle" in Versorgungssystemen mit "offener Architektur" werden, das auch im Neubau der jungen Familie erheblich kostengünstiger als heute übliche Heiztechnik erstellt werden kann. Für die preiswerte Grundausstattung eines solchen offenen Systems ist nur das erste Modul mit jeweils einem Wärmetauscher für Heizung und Warmwasser erforderlich Heizkessel können, wenn sie auf gleicher Höhe stehen, ohne Wärmetauscher direkt angeschlossen werden. Eine Kapazitätserweiterung ist problemlos möglich durch einfachen Anschluß weiterer leerer Speichermoduln, die noch erheblich kostengünstiger sind, als das erste Modul mit seinen Wärmetauschern.

Bisher sind einige wenige großvolumige Wasser-Wärmespeicher bekannt, die in sehr kostenträchtiger Weise aus Stahlblech gefertigt werden. Diese können aber nur in Einzelteilen in Gebäude transportiert und auf der Baustelle zusammengeschweißt werden und sind zu dem mit Korrosion behaftet.

Weiter sind Speicher mit Flanschverbindungen bekannt, wie sie in der Patentschrift DE 33 01 254 C2 beschrieben sind. Wie aus der Beschreibung zu entnehmen ist, sollen diese jedoch aus metallischen Werkstoffen gefertigt werden und nur der Brauchwasserbereitung dienen, was auch aus der Bezeichnung "Boiler" zu entnehmen ist. Nur bei erhöhtem Warmwasserbedarf sollen weitere Speichereinheiten nach oben aufgeschraubt werden. Auch ist die Gesamtfunktion nicht vergleichbar. Speicherkapazitäten von 50.000 l und mehr sind dabei nicht vorgesehen und auch nicht machbar.

Weiter sind Speicher nach der Patentschrift CH 651 920 A5 bekannt, bei dem es sich jedoch um nur ein Speicherteil handelt, das lediglich aus Stabilitätsgründen an den beiden Längsseiten eingedrückt ist und so einzelne Kammern entstehen läßt, die untereinander verbunden sind Soll daraus eine Batterie entstehen, wie in der Patentschrift auf Seite 4, Spalte 2, Zeilen 16 - 23 beschrieben, müssen Speicher der gleichen Art, mit allen erforderlichen Wärmetauschern in der gleichen Weise bestückt werden. Eine homogene Verbindung des Speicherwassers in den einzelnen Behältern besteht nicht. Damit ist auch die Gesamtfunktion nicht vergleichbar.

Der Erfindung liegt die Aufgabe zugrunde, die Ausnutzung fossiler Brennstoffe zu Heizzwecken, die Nutzung erneuerbarer Energien - im besonderen der Solarenergie. Wind- und Wasserkraft - den Nutzungsgrad von Block-Heiz-Kraftwerken und die Nutzung industrieller und gewerblicher Abwärme, erheblich zu verstärken und der Energieeinsparung und Emissionsminderung dienen. Dies ist, wie Meßergebnisse aus der Vergangenheit belegen, nur durch den Einsatz großvolumiger Langzeit-Wasser-Wärmespeicher möglich Um jedoch einen problemlosen Einsatz auch in bestehenden Gebäuden zu gewährleisten, und eine einfache Erweiterung der Speicherkapazität zu ermöglichen, müssen die Moduln so bemessen sein, daß sie durch Normtüren von 800mm Breite zu transportieren sind, auf einfachste Weise zu endlos großen Batterien zu koppeln sind, die sich, obwohl sie aus einzelnen Moduln bestehen, wie ein einziger homogener Speicher verhalten, in dem sich eine ungestörte Temperaturschichtung während der Be- und Entladevorgänge einstellen kann.

Gemäß der Erfindung wird diese Aufgabe durch die Merkmale des einzigen Patentanspruchs gelöst.

Sehr großen Einfluß auf die Rußschichtbildung und die Schadstoffemission hat die jährliche Brennerstartzahl bei Heizkesseln, die aufgrund der Überdimensionierung in 80% aller Gebäude und auf grund ihres sehr geringen Wasserinhaltes, bis zu 40.000 beträgt` und damit laut Bundesumweltamt für 50% des gesamten Schadstoffausstoßes verantwortlich ist. Schon bei einem Speichervolumen von 2.000 l, wird sie auf 500 und weniger reduziert. Dadurch werden die Kamin-, Betriebs- und Bereitschaftsverluste, die bekanntlich je nach Anlagenart zwischen 20% und 60% liegen, derart minimiert, daß sich eine Primärenergieersparnis von 30% - 70% und damit auch eine Emissionsminderung bei CO₂ von 30% bis 70% ergibt. Eine Überdimensionierung von Heizkesseln im Speicherbetrieb hat praktisch keinen Einfluß mehr auf den Jahresnutzungsgrad einer Anlage. Sie führt lediglich dazu, daß die Betriebszeit etwas verkürzt wird. Im Betrieb arbeiten Brenner und Kessel mit ihrem höchstmöglichen Wirkungsgrad, so daß der Feuerungswirkungsgrad annähernd auch Anlagenwirkungsgrad ist.

Die Rußschichtbildung in Heizkesseln, die besonders aus der hohen Startzahl resultiert, beträgt nur noch ca. 5% der sonst üblichen, was wiederum zu einem verminderten Primärenergieeinsatz führt. Durch die geringe Startzahl ergibt sich lange Brennerlaufzeit die zu einer besseren Kaminerwärmung führt, aber nur ca. ein mal pro Tag erfolgt. Kaminversottung entfällt damit.

Feuerräume für Öl- und Gasbrenner, die zur Zeit fast alle für den Niedertemperaturbetrieb mit all seinen Nachteilen konzipiert sind, können im Speicherbetrieb wieder der altbewährten Hochtemperaturtechnologie angepaßt werden. Dadurch ergibt sich eine weitere Emissionsminderung, die bei CKW mit 50% und bei CO mit 30% bewertet werden kann. Hinzu kommt daß Heizkessel in Hochtemperaturtechnologie erheblich einfacher und damit kostengünstiger hergestellt werden können.

Abwärme aus Industrie und Gewerbe, die sehr oft im Niedertemperaturbereich ansteht und deshalb meist nicht genutzt wird, kann auf einfachste Weise eingespeichert werden. Dazu wird in eine kopfseitige Flanschöffnung ein Wärmetauscher eingebracht, an den die Wärmequelle angeschlossen wird.

Solarenergie, wie sie zur Zeit genutzt wird, dient in ca. 99% aller Fälle nur der Brauchwasserbereitung weil zu Heizzwecken bei konventionellen Heizsystemen Anbindungs- und Speichermöglichkeiten fehlen. Der Jahresnutzungsgrad wird laut statistischen Erhebungen für den m² mit ca. 200 kWh angegeben. Wird sie jedoch einem Speichervolumen von 6.000 l zugeführt und auch zu Heizzwecken genutzt steigt der Jahresnutzungsgrad auf ca. 800 kWh/m² und ist mit weiterer Speicherkapazitätserhöhung noch höher anzusetzen.

Die gestellten Aufgaben werden durch die Kennzeichnungsmerkmale des Patentanspruchs gelöst. Die Speichermoduln sind so konzipiert, daß sie leicht durch Normtüren von 800mm Breite transportierbar sind und nebeneinandergestellt, endlos große Batterien bilden können, die sich dennoch wie ein einziger, homogener Speicher verhalten. Die mechanische Verbindung und Abdichtung der seitlich angeordneten oberen und unteren Flanschöffnungen, die der Erweiterung dienen, erfolgt in einfacher Weise mit übergezogenen Spannringen Diese Flanschöffnungen mit großer lichter Weite gewährleisten auch in einer Batterie aus vielen gekoppelten Speichermoduln, daß sich eine ungestörte Temperaturschichtung allein durch den Gewichtsunterschied des oben wärmeren Wassers und des unteren kälteren Wassers einstellt. Das gesamte Speicherwasser als Wärmeträgermedium bildet jedoch eine homogene Masse, die nicht durch Wände getrennt ist.

Wird in einer Batterie aus vielen Speichermoduln nur das erste Modul durch einen unten eingebrachten Wärmetauscher oder einen direkten Anschluß einer Energiequelle, aufgeheizt, steigt das erwärmte Wasser durch natürliche Konvektion nach oben, während der untere Bereich vorerst kalt bleibt Das erwärmte Wasser verteilt sich durch die oberen seitlichen Flanschverbindungen ohne mechanische Hilfe über die gesamte Speicherbatterie, das noch kalte Wasser in umgekehrter Richtung über die unteren Flanschverbindungen. Dieser Effekt setzt sich so lange fort, bis die gesamte Speicherbatterie geladen ist und eine unten wie oben gleichmäßige Temperaturverteilung aufweist. Wird nun durch einen oberen Wärmetauscher Wärme entnommen, setzt der gleiche Effekt in umgekehrter Reihenfolge ein.

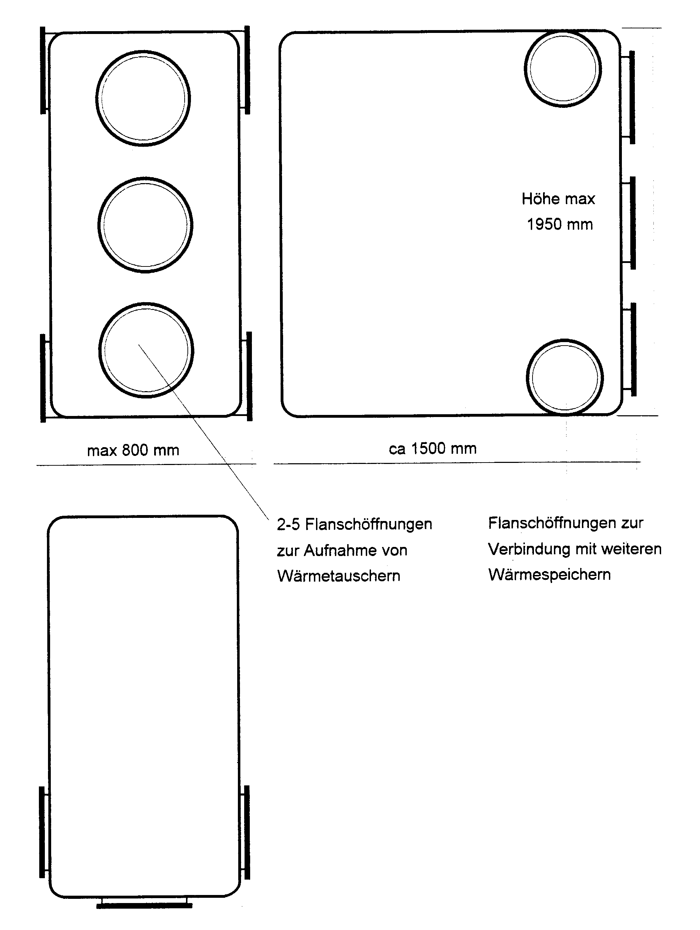

## Patentansprüche

1. Erweiterbarer Langzeit-Wasser-Wärmespeicher, mit zu einer Wärmespeicherbatterie großer Volumenkapazität erweiterbaren mit Kopf- und Längsseiten versehenen Speichermoduln aus Kunststoff, wobei die Kopfseiten eine Breite von maximal 800mm aufweisen, dadurch gekennzeichnet, daß die Speichermoduln an ihren Kopfseiten zwei bis fünf Flanschöffnungen aufweisen, durch die an verschiedene Energiekreisläufe anschließbare Wärmetauscher eingeführt werden können und für eine Kapazitätserweiterung mit weiteren nebeneinander angeordneten und parallel geschalteten Speichermoduln verbindbar sind, wo bei nur das erste Speichermodul mit Wärmetauschern bestückt werden muß, jedoch die Erweiterungsmoduln keine Wärmetauscher mehr benötigen und deren kopfseitige Flanschöffnungen mit Blinddeckeln verschlossen werden können, und wobei an den Längsseiten aller Speichermoduln jeweils oben und unten Flanschöffnungen großer lichter Weite angeordnet sind, mit denen die Speichermoduln mittels über die Flansche gezogener Spannringe nacheinander verbindbar sind, so daß die Be- und Entladung auch in einer Batterie aus einer Vielzahl einzelner Speichermoduln mit gleichmäßiger Temperaturschichtung über die gesamte Batterie, allein durch naturliche Konvektion erfolgt, wobei die gesamte Batterie sich wie ein homogener Speicher als einem Stuck verhält.

## Claims

1. Expandable longterm water heat-tank with storage modules, perferably made of synthetic material, with head and lateral parts that is expandable to a heat storage battery of large volume capacity. Max. width of head parts 800 mm. Storage modules are equipped with two to five flange openings at the head part by which heat exchangers connectable to different energy circuits can be installed and connected with additional storage modules placed next to each other and connectable parallely for increase in capacity. Heat exchangers only for the first storage module, heat exchangers not necessary for additional modules, their headend flange openings can be closed by blind covers. On lateral parts of all storage modules each on top and bottom flange openings with large inner diameter by which the storage modules can be connected subsequently by clamping rings mounted on the flanges. Consequently, charging and decharging is effected only by natural convention also in a battery composed of numerous individual storage modules with even temperature stratification over the complete battery. The overall battery behaves like one homogeneous storage element.

## Revendications

1. Accumulateur longue durée d'eau de chauffage, à modules accumulateurs extensibles pour former une batterie d'accumulateurs thermiques d'une grande capacité volumique et présentant des côtes frontaux et longitudinaux, de préférence en matière plastique, les côtes frontaux ayant une largeur de 800 mm maximum, caractérisé en ce que les modules accumulateurs présentent sur leurs côtes frontaux deux à cinq orifices à brides par lesquels peuvent être introduits des échangeurs de chaleur raccordables à divers circuits énergétiques et que lesdits modules accumulateurs sont juxtapoables et connectables en parallèle pour obtenir une extension de capacité, seul le premier module accumulateur devant être équipé d'échangeurs de chaleur, les modules-extension n'ayant cependant plus besoin d'échangeurs de chaleur et les orifices des brides qu'ils présentent étant obturables par des couvercles borgnes, des orifices à brides à fort calibre d'ouverture étant disposés en haut et en bas sur les côtes longitudinaux de tous les modules accumulateurs, par lesquels orifices les modules accumulateurs sont reliables juxtaposés au moyen d'anneaux de serrage montés sur les brides de sorte que le chargement et le déchargement depuis un grand nombre de modules accumulateurs à stratification uniforme des températures sur toute la batterie se fassent uniquement par convention naturelle, la batterie tout entière se comportant nomme un accumulateur homogène.
